# EUROPÄISCHE PATENTSCHRIFT

(11) **EP 0 916 543 B1**
(45) Veröffentlichungstag und Bekanntmachung des Hinweises auf die Patenterteilung: **02.01.2003**
(21) Anmeldenummer: 98119375.8
(22) Anmeldetag: 14.10.1998
(51) Int. Cl.: B60K 23/02, F16D 48/06

(54) **Kupplungspedalkraft-Steuerung**
Force control for clutch pedal
Controle de force pour pédale d'embrayage

(30) Priorität: 11.11.1997 DE 19749812
(43) Veröffentlichungstag der Anmeldung: 19.05.1999
(73) Patentinhaber: MAN Nutzfahrzeuge Aktiengesellschaft, 80976 München (DE)
(72) Erfinder: Schaller, Carl-Viktor, Dr. Ing., 82194 Gröbenzell (DE); Heuer, Fritz, 85238 Petershausen (DE)

(56) Entgegenhaltungen:
- EP-A- 0 453 749
- EP-A- 0 616 142
- DE-A- 3 922 215
- US-A- 5 469 946
- PATENT ABSTRACTS OF JAPAN vol. 008, no. 064 (M-285), 27. März 1984 (1984-03-27) & JP 58 214024 A (YAMAHA HATSUDOKI KK), 13. Dezember 1983 (1983-12-13)

## Beschreibung

Die Erfindung betrifft ein Verfahren und eine Vorrichtung nach dem Oberbegriff des Anspruches 1.

Bei Lastkraftwagen oder Omnibussen mit mechanischem Wechselgetriebe und mechanisch über ein Kupplungspedal betätigbare Kupplung ist es bekannt, dass über einen hydraulischen Geberzylinder und Nehmerzylinder die Kupplung betätigbar ist.

Um bei schweren Kupplungen die Pedalkraft zu verringern, werden auf der Nehmerseite auch Kupplungskraftverstärker verwendet, die aus einem Hydraulikzylinder und einem mit diesem in Wirkverbindung stehenden Pneumatikzylinder bestehen. Der Druck der Druckluft für den Pneumatikzylinder wird ab einem bestimmten Mindestdruck im Hydraulikzylinder linear steigend, abhängig vom Druck im Hydraulikzylinder, gesteuert.

Die Wirkung des Kupplungskraftverstärkers kann sehr gut, die erforderliche Pedalkraft sehr niedrig sein. Allerdings geht mit der genannten Einrichtung das Gefühl zur Kupplung mehr oder weniger - je nach Ausführung - verloren. Hinzu kommt, dass die Motoren leiser und drehmomentstärker und die Fahrerhaus-Isolierungen immer besser werden. Aus den genannten Gründen kann ein unverhältnismäßig hoher Kupplungsverschleiß besonders beim Anfahren resultieren.

Weiterhin bekannt ist eine Kupplungsbetätigungseinrichtung, die zwischen Pedal und einem fahrzeugfesten Teil (Pedalplatte) eine Druckfeder aufweist, die in der nicht betätigten Position des Pedals eine leichte Gegenkraft zur Pedalbetätigungskraft aufbringt, damit das Pedal klapperfrei in der Nullstellung bleibt und ab einem bestimmten Pedalweg in Richtung Betätigungskraft wirkt, so dass die erforderliche Pedalbetätigungskraft für den Fahrer über den Pedalweg abnimmt. Die Haltekraft bei ausgekuppelter Kupplung ist gering. Die genannte Ausführung ist preiswert, aber die Anwendung ist nur bis zu mittelschweren Kupplungen möglich.

Aufgabe der Erfindung ist es, eine Kupplungsbetätigung zu schaffen, die auch für schwere Kupplungen dem Fahrer ein gutes Kupplungsgefühl gibt und den Kupplungsverschleiß möglichst Fahrer unabhängig minimiert.

Die Aufgabe wird erfindungsgemäß durch die Merkmale des Anspruches 1 gelöst.

Dadurch, dass ein in Wirkverbindung mit dem Kupplungspedal stehender und über seinen Arbeitsweg steuerbarer Pneumatikzylinder die vom Fahrer zu erzeugende Pedalkraft über den Kupplungsweg beeinflusst, kann einerseits eine kupplungsschonende und andererseits eine dem Fahrer subjektiv richtig erscheinende Betätigungsweise des Einkuppelvorganges vermittelt werden. Der Pneumatikzylinder ist über einen Hebel und über eine Welle, an der auch über einen Hebel die Kolbenstange des Geberzylinders befestigt ist, mit dem Kupplungspedal verbunden.

Beim Auskuppeln unterstützt der Pneumatikzylinder den Ausrückvorgang so, dass am Pedal nach einer bestimmten Anfangskraft und einem kurzen Weg, die Pedalkraft über den weiteren Pedalweg annähernd gleich bleibt und gegen Ende des Pedalweges abnimmt, was dann der Haltekraft entspricht. Beim Einkuppeln steigt nach der Haltekraft die nötige Pedalkraft an, so lange, bis kurz vor dem Schließen der Kupplung eine maximale Pedalkraft auftritt, die dann linear stark fallend bis zum Pedalweg s = 0(mm) verläuft.

Durch diesen Pedalkraftverlauf hat der Fahrer wieder ein Gefühl zur Kupplung und wird das Kupplungspedal kurz vor dem Einkuppeln nicht lange halten, da die Pedatkraft hoch ist. Er schont aber auch damit die Kupplung, weil er eben relativ schnell einkuppeln wird. Trotzdem hat er den Komfort des leichten Auskuppelns und des leichten Haltens der Kupplung. Die Pedalkraft wird dadurch verändert, dass der Pneumatikzylinder über seinen Arbeitsweg mehr oder weniger die Kraft übemimmt, die die Kupplungsfedern am Pedal erzeugen.

Der Druck im Pneumatikzylinder wird über den Bordcomputer gesteuert, der Signale von Wegsensoren in der Kupplung oder Winkelsensoren der Pedallagerung und/oder einem Temperatursensor und/oder eine gerechnete Kupplungstemperatur in der Kupplung zur Steuerung erhält. Ungewolltes oder durch den Fahrer nicht erkanntes hohes Kupplungsschleifen, das aus der großen Übersetzung durch z. B. einen Kupplungskraftverstärker deshalb erfolgt, weil eben das Gefühl zur Kupplung verloren gegangen ist, kann bei dem erfindungsgemäßen Verfahren nicht oder nur im geringen Maße auftreten.

Alternativ kann ein hydraulischer Kupplungsgeberzylinder mit pneumatisch gesteuerter Unterstützung eingesetzt werden, dessen Druckluft ebenfalls über Signale vom Bordcomputer gesteuert wird.

Die Anwendung des Verfahrens und der Vorrichtung ist auch bei schweren Kupplungen möglich.

In der Zeichnung ist ein Ausführungsbeispiel schematisch dargestellt.

Es zeigen:
- Fig. 1: eine Seitenansicht von Kupplungspedal mit Zylinderanordnung,
- Fig. 2: eine Kennlinie Kraft/Weg bei hydraulischer Übersetzung,
- Fig. 3: eine Kennlinie Kraft/Weg mit Kupplungskraftverstärker,
- Fig. 4: eine Kennlinie Kraft/Weg mit Kupplungspedalkraft-Steuerung und
- Fig. 5: einen hydraulischen Kupplungsgeberzylinder mit pneumatischer Unterstützung.

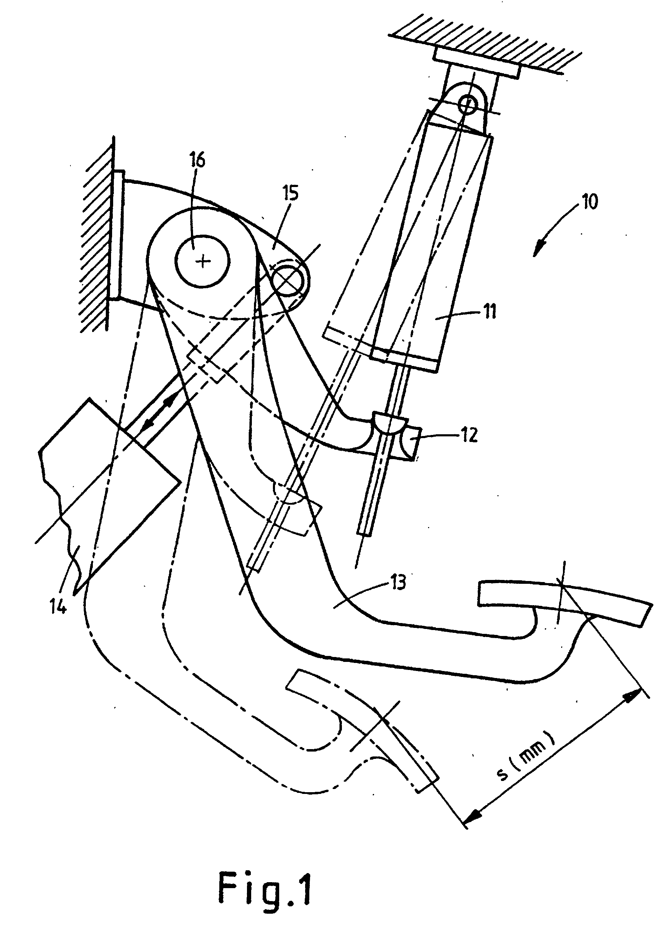

Fig. 1 zeigt die Seitenansicht für die Kupplungspedalkraft-Steuerung 10. Die erforderliche Pedalkraft am Kupplungspedal 13 ergibt sich aus der erforderlichen Kraft am Geberzylinder 14 und die über den Arbeitsweg durch den Bordcomputer gesteuerte Druckkraft des Pneumatikzylinders 11. Der Pneumatikzylinder 11 ist über den Hebel 12, der Geberzylinder 14 über den Hebel 15 und beide über die Welle 16 mit dem Pedal 13 verbunden. Der Pedalweg ist mit s(mm) eingezeichnet.

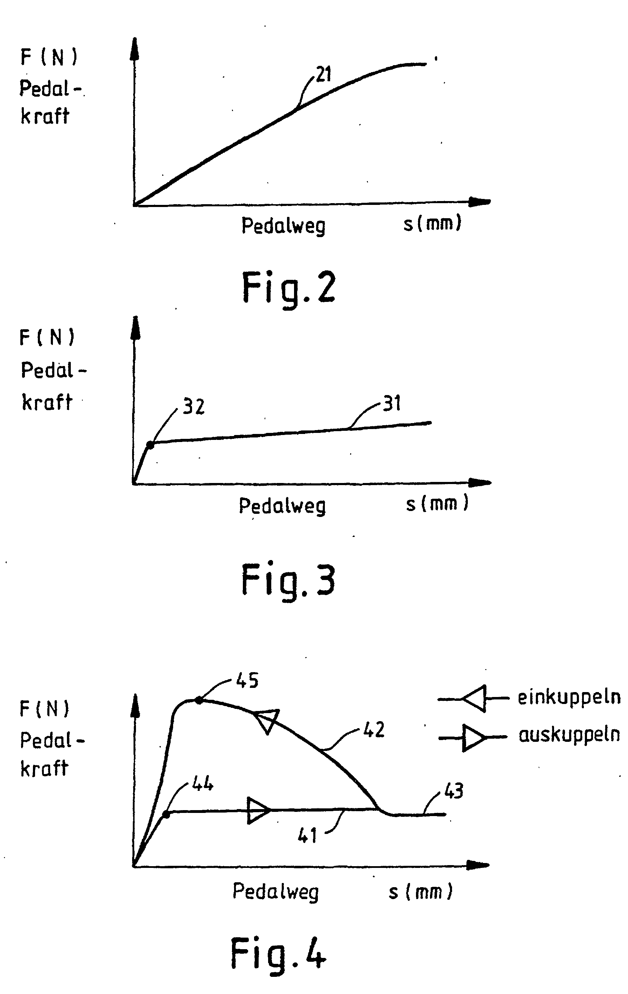

Fig. 2 zeigt eine annähernd linear steigende/fallende Kennlinie 21. Der Pedalkraftverlauf über den Pedalweg ist typisch für eine einfache hydraulische Übersetzung von Geber- und Nehmerzylinder. Die Pedalkraft für den Aus- und Einrückvorgang ist gleich (abzüglich Hysterese).

Fig. 3 zeigt eine Kennlinie 31. Der Pedalkraftverlauf über den Pedalweg ist typisch für eine hydraulische Kupplungsbetätigung mit pneumatischem Kupplungskraftverstärker, der in einer Achse und Baueinheit mit dem Hydraulikzylinder ist und abhängig vom Druck im Hydraulikzylinder mit Druckluft beaufschlagt wird (keine Zeichnung). Ab einer bestimmten Mindestpedalkraft 32 ist die weitere Pedalkraft über den Pedalweg kaum noch steigend. Das Gefühl für den Fahrer über den Einkuppelvorgang ist hier kaum noch vorhanden. Die Pedalkraft für den Aus- und Einrückvorgang ist gleich.

Fig. 4 zeigt die Kennlinien 41, 42, 43 nach dem erfindungsgemäßen Verfahren. Das Auskuppeln erfolgt nach der Kennlinie 41, die in den Kennlinienbereich 43 übergeht. Der Kennlinienbereich 43 bedeutet die Haltekraft, der Punkt 44 die Mindestbetätigungskraft zum Ausrücken der Kupplung. Für das Einkuppeln gilt die Kennlinie 42, die aus dem niedrigen Haltekraftbereich 43 stark steigend bis zu einem Maximum 45 und dann nach einem kurzen weiteren Pedalweg annähernd linear fallend zum Nullpunkt verläuft. Durch die geringe Kraft beim Auskuppelvorgang 41, 43 hat der Fahrer einen hohen Komfort und beim Einkuppelvorgang 42, 45 hat er durch die höhere, angepaßte Pedalkraft mehr Gefühl zur Kupplung. Lange Kupplungsschleifzeiten werden dadurch vermieden bzw. minimiert.

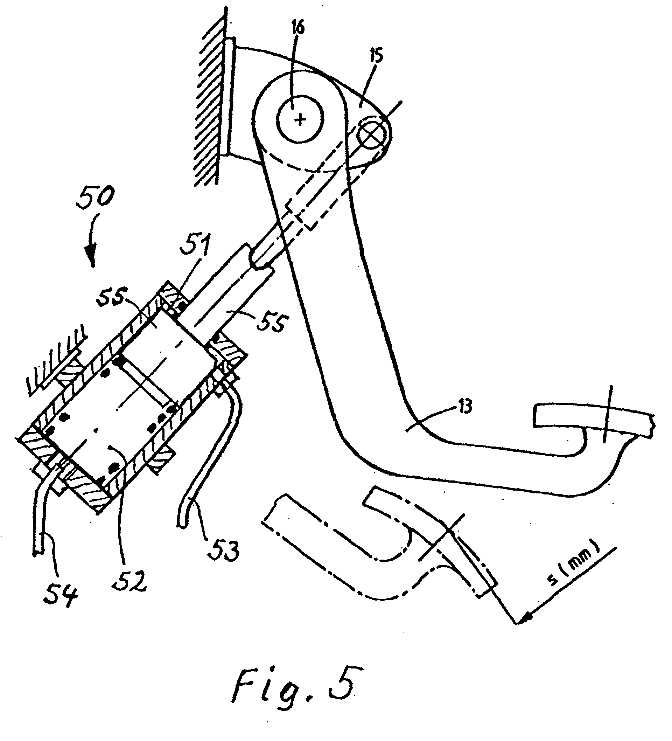

Fig. 5 zeigt einen hydraulischen Kupplungsgeberzylinder 50 mit pneumatischer Unterstützung 50. Die druckgesteuerte Druckluft wird über die Pneumatikleitung 53 in den Zylinderraum 51 eingebracht und unterstützt mehr oder weniger, je nach dem, ob es sich um einen Ein- oder Ausrückvorgang handelt und abhängig vom Pedalweg, die Pedalkraft, die über des Pedal 13, über die Welle 16 und den Hebel 15 auf den Kolben 55 wirkt. Der Druck im Hydraulikteil 52 des Zylinders 50 wird über die Hydraulikleitung 54 auf den Kupplungsnehmerzylinder übertragen.

## Patentansprüche

1. Verfahren zur Steuerung des Einkupplungsvorganges beim Anfahren eines Lastkraftwagens oder Omnibusses mit einer hydraulisch über ein Kupplungspedal betätigbaren Kupplung zwischen Dieselmotor und Getriebe, mit Sensoren für kupplungsspezifische Signale, mit einem Steuergerät oder einem Bordcomputer mit kupplungsspezifischen Daten, wobei die Kupplungspedalkraft über einen mit dem Kupplungspedal (13) in Wirkverbindung stehenden Pneumatikzylinder (11) zusätzlich zum Geberzylinder (14) oder alleine mit einem hydraulischen Kupplungsgeberzylinder (50) mit pneumatischer Unterstützung (50) abhängig vom Kupplungsweg (s(mm)) und sensorisch ermittelten Betriebswerten der Kupplung so gesteuert ist, dass die Kupplungspedalkraft (41, 42, 44, 45) für das Einkuppeln (42, 45) höher ist, als für das Auskuppeln (41,44).

2. Verfahren nach Anspruch 1, **dadurch gekennzeichnet, dass** beim Einkuppeln, kurz vor dem Ende des Einrückweges der Kupplung, die Pedalkraft (45) am höchsten ist und dann bis zum Ende des Einrückweges schnell abfällt.

3. Verfahren nach Anspruch 1, **dadurch gekennzeichnet, dass** die Pedalkraft für das Einkuppeln auch vom Ansteigen der Kupplungstemperatur beeinflussbar ist.

## Claims

1. Procedure for controlling clutch engagement while a truck or bus/coach moves off, with a clutch which can be hydraulically actuated via a clutch pedal and is arranged between the diesel engine and the gearbox, with sensors for clutch-specific signals, with a control unit or with an on-board computer with clutch-specific data, whereby either in addition to the master cylinder (14) or alone together with a hydraulic clutch master cylinder (50) with pneumatic support (50) the clutch-pedal force is controlled as a function of the clutch travel (s(mm)) and of operational values determined by sensors for the clutch via a pneumatic cylinder (11) which is in a working connection with the clutch pedal (13), this control action being effected in such a way that the clutch pedal force (41, 42, 44, 45) for clutch engagement (42, 45) is higher than that for clutch disengagement (41,44).

2. Procedure according to Claim 1, **characterised in that** during clutch engagement, shortly before the end of the clutch engagement path, the pedal force (45) is highest and then decreases rapidly towards the end of said clutch engagement path.

3. Procedure according to Claim 1, **characterised in that** the pedal force for clutch engagement can also be influenced by the increase in the clutch temperature.

## Revendications

1. Procédé de commande de l'opération d'embrayage au démarrage d'un camion ou d'un autocar ou autobus, faisant appel à un embrayage disposé entre moteur Diesel et boîte de vitesses et actionnable hydrauliquement par l'intermédiaire d'une pédale d'embrayage, à des capteurs de signaux propres à l'embrayage, à un appareil de commande ou à un ordinateur de bord à données propres à l'embrayage, l'effort à exercer sur la pédale d'embrayage (13) étant commandé en fonction de la course de la pédale (s(mm)) et de paramètres de fonctionnement de l'embrayage déterminés par capteurs, par l'intermédiaire d'un cylindre pneumatique (11) solidaire de la pédale, en plus du maître-cylindre d'embrayage (14), ou par le seul biais d'un maître-cylindre d'embrayage hydraulique à assistance pneumatique (50), de telle manière que l'effort à exercer sur la pédale (41, 42, 44, 45) soit plus élevé pour l'embrayage (42, 45) que pour le débrayage (41, 44).

2. Procédé suivant la revendication 1, **caractérisée en ce qu'**à l'embrayage, l'effort à exercer sur la pédale (45) soit le plus élevé juste avant la fin de la course d'embrayage et qu'il chute alors rapidement jusqu'à la fin de la course d'embrayage.

3. Procédé suivant la revendication 1, **caractérisée en ce que** l'effort à exercer sur la pédale pour l'embrayage soit aussi influençable par la montée en température de l'embrayage.
